# EUROPÄISCHE PATENTSCHRIFT

(11) **EP 0 372 538 B1**
(45) Veröffentlichungstag und Bekanntmachung des Hinweises auf die Patenterteilung: **12.06.1996**
(21) Anmeldenummer: 89122522.9
(22) Anmeldetag: 06.12.1989
(51) Int. Cl.: B60S 1/38

(54) **Scheibenwischerblatt**
Windscreen wiper blade
Lame d'essuie-glace

(30) Priorität: 07.12.1988 DE 3841133
(43) Veröffentlichungstag der Anmeldung: 13.06.1990
(73) Patentinhaber: Petermann, Günther, D-48653 Coesfeld (DE)
(72) Erfinder: Petermann, Günther, D-48653 Coesfeld (DE)
(74) Vertreter: Cohausz & Florack

(56) Entgegenhaltungen:
- DE-A- 2 003 912
- DE-B- 2 342 437
- GB-A- 2 202 134
- PATENT ABSTRACTS OF JAPAN vol. 6, no. 20 (M-110)(898) 05 Februar 82, & JP-A- 56 138048 (TOYODA GOSEI K.K.) 28 Oktober 1981,
- PATENT ABSTRACTS OF JAPAN vol. 6, no. 20 (M-110)(898) 05 Februar 1982, & JP-A- 56 138049 (TOYODA GOSEI K.K.) 28 Oktober 1981,

## Beschreibung

Die Erfindung betrifft ein Scheibenwischerblatt für ein Fahrzeug mit einem profilförmigen Wischgummi, das an einem Rückenprofil befestigt ist und das mit Lippen an der Scheibenoberfläche anliegt, wobei das Profil des Wischgummis in Längsrichtung zwei- oder mehrfach geteilt ist.

Ein solches Scheibenwischerblatt ist aus der DE-C-3 504 549 bekannt. Dieses bekannte Scheibenwischerblatt erreicht eine sehr gleichmäßige Benetzung der Fahrzeugscheibe mit Waschflüssigkeit, ohne daß Flüssigkeit verloren geht, da diese in kürzestem Abstand direkt vom Wischblatt auf die Scheibe gespritzt wird. Das Wischgummiprofil weist aber einen verhältnismäßig großen Querschnitt auf, so daß ein Wechseln des Profils aufwendig ist.
Aus der JP-A-138048/81 ist ferner ein Wischerblatt bekannt, das einschneidig ist und geschleppt wird. Durch das kalottenförmige Gelenk und seinen Anschlägen ist die Rückenstrebe nur in einem vorbestimmten Wischbereich schwenkbar. Auch bei diesem bekannten Wischerblatt muß das gesamte Profil aufwendig gewechselt werden.

Aufgabe der Erfindung ist es, ein Scheibenwischerblatt der eingangs genannten Art so zu verbessern, daß nach Abnutzung der Lippen des Wischgummiprofils ein wirtschaftliches Austauschen ermöglicht wird.

Diese Aufgabe wird erfindungsgemäß dadurch gelöst, daß das Wischgummiprofil und die Lippen voneinander trennbar und mehrteilig ausgebildet sind, wobei mindestens ein der Scheibe naher, mindestens eine Lippe bildender Profillängsbereich des Wischgummis am übrigen vom Rückenprofil getragenen Wischgummiprofil lösbar befestigt ist.

Hierdurch braucht nur der Bereich des Wischgummiprofils gewechselt zu werden, der die an der Scheibe anliegenden Lippe bildet, so daß nur wenig Wischgummimaterial ausgetauscht werden muß. Dies führt zu einer besonders kostengünstigen Lösung. Hierbei ist die Konstruktion einfach, die Handhabung leicht und eine optimale Anpassung an die Scheibenkrümmung gewährleistet.

Eine konstruktiv besonders einfache und leicht lösbare Befestigung des Profillängsbereiches wird dann erreicht, wenn der oder die lösbare(n) Profillängsbereich(e) mit hinterschnittenen Vorsprüngen auf der dem übrigen Wischgummiprofils zugewandten Seite in entsprechend geformten Ausnehmungen des übrigen Wischgummiprofils einliegen.
Vorzugsweise wird vorgeschlagen, daß das Wischgummiprofil und/oder der oder die lösbare(n) Profillängsbereiche einen Längskanal für ein Fluid, insbesondere für eine Waschflüssigkeit bilden, das bzw. die durch Öffnungen austritt. Konstruktiv besonders einfach wird der Längskanal dadurch gebildet, daß der oder die lösbare(n) Profillängsbereiche auf der dem übrigen Wischgummiprofil zugewandten Seite eine Längsausnehmung bilden, die zusammen mit einer Längsausnehmung des übrigen Wischgummiprofils einen Längskanal für das Fluid bildet, wobei sich von dem Längskanal Öffnungen für den Fluidaustritt zu der Scheibe zugewandten Wischgummiunterseite erstrecken. Dies ermöglicht auch eine einfache Reinigung des Längskanals.

Eine zweifache Verwendung des lösbaren Profillängsbereichs oder -bereiche wird dadurch ermöglicht, daß die auf entgegengesetzten Seiten angeordneten hinterschnittenen Vorsprünge und Lippen des oder der lösbare(n) Profillängsbereich(e) denselben Querschnitt in Form und Größe aufweisen und dreh- oder klappsymmetrisch angeordnet sind.

Vorzugsweise wird vorgeschlagen, daß die der Scheibe zugewandte Unterseite des oder der lösbar(e) Profillängsbereich(e) konkav gewölbt ist. Besonders vorteilhaft ist es, wenn das elastische Material des oder der lösbaren Profillängsbereichs bzw. -bereiche weicher ist als das Material des Wischgummiprofils. Hierdurch können die an der Scheibe anliegenden Lippen entsprechend ihrer Aufgabe den jeweilig richtigen exakten Materialzustand besitzen, d.h. die weiter außen liegenden Lippen bestehen aus härterem und/oder verschleißfesterem Material, so daß eine tragende, gleitende Reibung (implizite Beschleunigung), wie das Aufreißen von entstandenen Materialstrukturen garantiert wird, und die weiter innen liegenden Lippen aus weicherem Material, so daß die ihr auferlegte Aufgabe, als Nachläufer, die Windschutzscheibe sicher, kontaktschlüssig und damit schlierenfrei, unverzerrt abzuziehen.

Ausführungsbeispiele der Erfindung sind in den Zeichnungen dargestellt und werden im folgenden näher beschrieben. Es zeigen im vergrößertem Maßstab
- Figur 1: einen Querschnitt durch ein Scheibenwischerblatt in einem ersten Ausführungsbeispiel und
- Figur 2: einen Querschnitt durch ein Scheibenwischerblatt in der linken Hälfte in einem zweiten Ausführungsbeispiel und in der rechten Hälfte in einem dritten Ausführungsbeispiel,

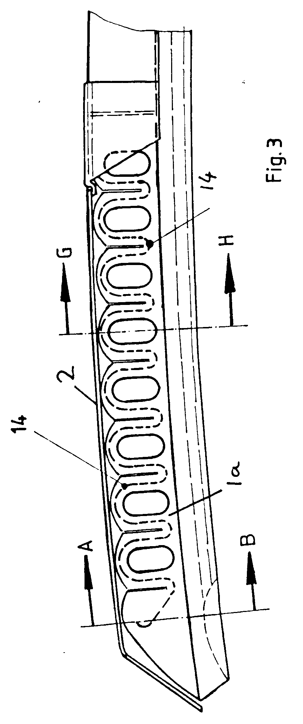

- Figur 3: einen mittigen Längsschnitt durch das Scheibenwischerblatt in einem Ausschnitt,

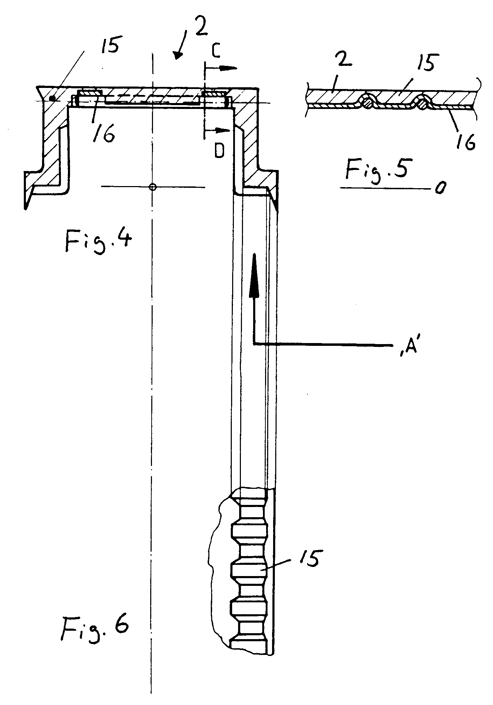

- Figur 4: einen Querschnitt durch ein Rückenprofil aus Kunststoff,
- Figur 5: einen Schnitt nach C-D in Figur 4 und
- Figur 6: die Unteransicht eines Randes des Rückenprofils nach "A" in Figur 4.

Ein Wischgummiprofil 1 ist von einem insbesondere metallenen Rückenprofil 2 aus einzelnen aneinander gelenkig befestigten Gliedern 15 aus Metall oder Kunststoff übergriffen und bildet mit seiner konkaven Unterseite 3 einen Hohlraum 4 zwischen Unterseite 3 und Fahrzeugscheibe 5. Eine besonders einfache Befestigung und Anlenkung wird dann erreicht, wenn die Glieder auf einem oder zwei flexiblen Stahlbändern befestigt sind. Das Wischgummiprofil 1 liegt nur mit beiden Außenrändern an der Scheibe 5 an, so daß die Unterseite 3 im mittleren Bereich gegenüber der Scheibe 5 den größten Abstand bildet. Zur Anlage an der Schiebe 5 gelangen auf beiden Seiten des Profils 1 mindestens je eine elastische Lippe 6a bis 6d. In den Ausführungsbeispielen sind zwei außenliegende Lippen 6a aus elastischem verschleißfestem Material und 6b und zwei innenliegende Lippen 6c und 6d aus weicherem Material als die Außenlippen 6a, 6b vorgesehen, so daß das Profil 1 mit vier Scheibe 5 anliegt.

Im Rücken des Wischgummiprofils 1a sind ein oder zwei Metallbänder 14 aus Federstahl eingelassen. Hierbei können die Metallbänder wellenförmig sein, um die Flexibilität zu erhöhen und damit eine optimale Anpassung an die Scheibenkrümmung zu gewährleisten.

Das Wischgummiprofil 1 ist einfach oder zweifach geteilt, wobei der im Rückenprofil 2 einliegende Wischgummibereich 1a ständig im Profil 2 verbleibt, während der übrige Profilbereich 1b bzw. die übrigen Profilbereiche 1c und 1d auswechselbar am Bereich 1a lösbar befestigt sind.

Die lösbaren Profilbereiche 1b-1d weisen auf den im Bereich 1a zugekehrten Seite längs bzw. parallel erstreckende hinterschnittene Vorsprünge 7 insbesondere mit schwalbenschwanzförmigen Querschnitt auf, um in entsprechenden Nuten 8 mit schwalbenschwanzförmigen Querschnitt des Bereiches 1a einzuliegen. Die Querschnitte können aber auch anders geformt sein, insbesondere teilkreisförmig, solange ein einschnappender oder rastender Halt erreicht wird.

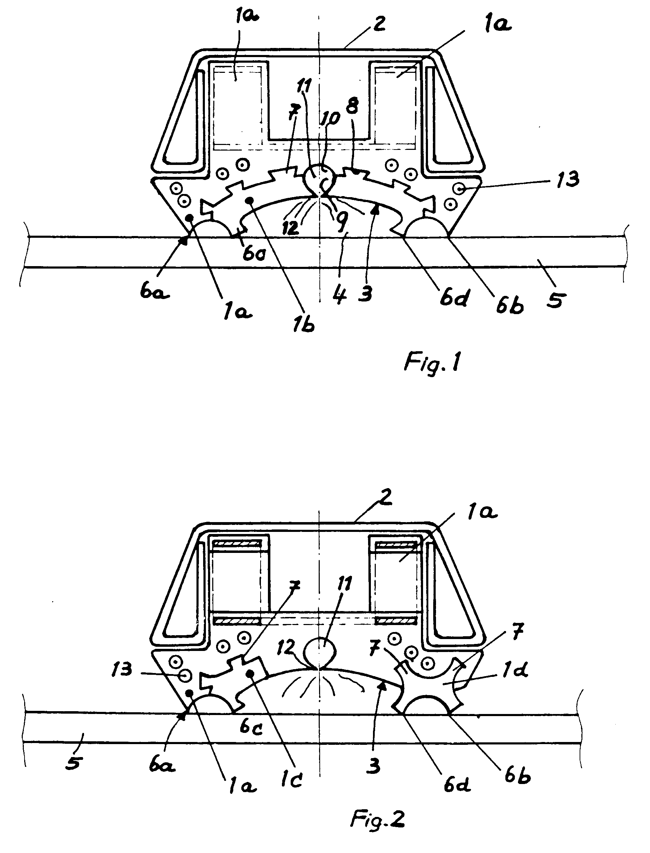

Im Ausführungsbeispiel nach Figur 1 bildet die den Bereichen 1a zugewandte Seite des Profilbereichs 1b eine Längsausnehmung, insbesondere Nut, die mit einer dieser Stelle entsprechenden Ausnehmung oder Nut 10 im Profilbereich 1a einen Längskanal 11 bildet, durch den ein Fluid, insbesondere eine Waschflüssigkeit und/oder Gas zuführbar ist, das durch Öffnungen 12 in den Hohlraum 4 und auf die Scheibe 5 gelangt. Ferner können Heizdrähte 13 zur Erwärmung des Fluids und/oder des Wischblattes im Bereich 1a nahe der Unterseite einliegen. Auch kann das Fluid und/oder Gas erwärmt sein, bevor es zugeführt wird.

Die zwei in Figur 2 dargestellten Ausführungsbeispiele unterscheiden sich von dem nach Figur 1 dadurch, daß die Lippen 6a-6d auf beiden Seiten von getrennten Profilbereichen 1c und 1d gebildet werden. nach dem in Figur 2 auf der linken Seite dargestellten Ausführungsbeispiel wird die dem Verschleiß stärker ausgesetzte Lippe 6c von einem getrennten lösbaren Profil 1c gebildet und die äußere Lippe 6a vom Profilbereich 1a. In der rechten Hälfte der Figur 2 sind beide Lippen 6b und 6d der jeweiligen Wischblattseite zusammen von einem lösbaren Profil 1d gebildet. In diesem Ausführungsbeispiel ist zusätzlich noch dargestellt, daß die Lippen der lösbaren Profile in gleicher Weise ausgeführt sein können und an der gleichen Stelle sitzen können, wie die Vorsprünge 7, so daß nach Abnutzung der Lippe(n) 6b-6c das Profil 1d gelöst werden, so daß die noch unverbrauchten hinterschnittenen Vorsprünge 7 jetzt als Lippe(n) dienen.

Das Material des Wischprofilbereichs 1a ist härter, insbesondere weist es eine Härte von etwa 60 Shor auf, als das Material des oder der lösbaren Profilbereichs bzw. -bereiche, das bzw. die Härte von etwa 30 Shor besitzen können.

## Patentansprüche

1. Scheibenwischerblatt für ein Fahrzeug mit einem profilförmigen Wischgummi (1), das an einem Rückenprofil (2) befestigt ist und das mit Lippen (6a-6d) an der Scheibenoberfläche anliegt, wobei das Profil (1) des Wischgummis in Längsrichtung zwei- oder mehrfach geteilt ist, **dadurch gekennzeichnet**, daß das Wischgummiprofil (1a) und die Lippen (6b-6d) voneinander trennbar und mehrteilig ausgebildet sind, wobei mindestens ein der Scheibe (2) naher, mindestens eine Lippe (6b-6d) bildender Profillängsbereich (1b-1d) des Wischgummis (1) am übrigen vom Rückenprofil (2) getragenen Wischgummiprofil (1a) lösbar befestigt ist.

2. Scheibenwischerblatt nach Anspruch 1,
**dadurch gekennzeichnet**, daß der oder die lösbare(n) Profillängsbereich(e) (1b-1d) mit hinterschnittenen Vorsprüngen (7) auf der dem übrigen Wischgummiprofils (1a) zugewandten Seite in entsprechend geformten Ausnehmungen (8) des übrigen Wischgummiprofils (1a) einliegen.

3. Scheibenwischerblatt nach Anspruch 1 oder 2,
**dadurch gekennzeichnet**, daß das Wischgummiprofil (1) und/oder der oder die lösbare(n) Profillängsbereiche (1b-1d) einen Längskanal (11) für ein Fluid, insbesondere für eine Waschflüssigkeit bilden, das bzw. die Öffnungen (12) austritt.

4. Scheibenwischerblatt nach Anspruch 3,
**dadurch gekennzeichnet**, daß der oder die lösbare(n) Profillängsbereiche auf der dem übrigen Wischgummiprofil (1a) zugewandten Seite eine Längsausnehmung (9) bilden, die zusammen mit einer Längsausnehmung (10) des übrigen Wischgummiprofils (1a) einen Längskanal (11) für das Fluid bildet, wobei sich von dem Längskanal (11) Öffnungen (12) für den Fluidaustritt zu der Scheibe (2) zugewandten Wischgummiunterseite (3) erstrecken.

5. Scheibenwischerblatt nach Anspruch 2, 3 oder 4,
**dadurch gekennzeichnet**, daß die auf entgegengesetzten Seiten angeordneten hinterschnittenen Vorsprünge (7) und Lippen (6b-6d) des oder der lösbare(n) Profillängsbereich(e) denselben Querschnitt in Form und Größe aufweisen und dreh- oder klappsymmetrisch angeordnet sind.

6. Scheibenwischerblatt nach einem der vorherigen Ansprüche, **dadurch gekennzeichnet**,
daß die der Scheibe (2) zugewandte Unterseite (3) des oder der lösbare(n) Profillängsbereich(e) (1b-1d) konkav gewölbt ist.

7. Scheibenwischerblatt nach einem der vorherigen Ansprüche, **dadurch gekennzeichnet**,
daß das elastische Material des oder der lösbaren Profillängsbereichs bzw. -bereiche weicher ist als das Material des übrigen Wischgummiprofils (1a) ist.

8. Scheibenwischerblatt nach einem der vorherigen Ansprüche, **dadurch gekennzeichnet**,
daß das Rückenprofil (2) aus einzelnen aneinander gelenkig gelagerten Gliedern (15) aus Metall oder Kunststoff zusammengesetzt ist.

9. Scheibenwischerblatt nach Anspruch 8,
**dadurch gekennzeichnet**, daß die Glieder auf einem oder zwei flexiblen Stahlbändern (16) befestigt sind.

10. Scheibenwischerblatt nach einem der vorherigen Ansprüche, **dadurch gekennzeichnet**,
daß im Rücken des Wischgummiprofils (1a) ein oder zwei Metallbänder (14) aus Federstahl eingelassen sind.

11. Scheibenwischerblatt nach Anspruch 10,
**dadurch gekennzeichnet**, daß die Metallbänder wellenförmig sind.

## Claims

1. Windscreen wiper blade for a vehicle, comprising a profiled blade rubber (1) which is attached to a rear profile (2) and rests against the windscreen surface via a plurality of lips (6a-6d), with the profile (1) of said blade rubber being longitudinally split into two or more parts, **characterized in that** the blade rubber profile (1a) and the lips (6b-6d) are separable from one another and consist of several parts, and that at least one longitudinal section (1b-1d) of said blade rubber (1), being close to the windscreen (2) and forming at least one lip (6b-6d), is detachably secured to the remaining blade rubber profile (1a) supported by the rear profile (2).

2. Windscreen wiper blade as set forth in Claim 1, **characterized in that** said detachable longitudinal section(s) (1b-1d) is or are engaged, via undercut projections (7) facing the remaining blade rubber profile (1a), in mating recesses (8) provided in said remaining blade rubber profile (1a).

3. Windscreen wiper blade as set forth in any of Claims 1 or 2, **characterized in that** the blade rubber profile (1) and/or the detachable longitudinal section(s) (1b-1d) form a longitudinal channel (11) for a fluid, and specifically for a washing fluid, which exits via the orifices (12).

4. Windscreen wiper blade as set forth in Claim 3, **characterized in that** the detachable longitudinal section(s) define a longitudinal recess (9) on the side facing towards the remaining blade rubber profile (1a), said longitudinal recess (9) cooperating with a longitudinal recess (10) in the remaining blade rubber profile (1a) to form a longitudinal fluid channel (11) with fluid outlet orifices (12) extending from said longitudinal channel (11) to the underside (3) of the blade rubber.

5. Windscreen wiper blade as set forth in any of Claims 2, 3 or 4, **characterized in that** the opposed undercut projections (7) and the lips (6b-6d) of the detachable longitudinal section(s) have cross-sections of identical shape and size, and are arranged in a rotationally and axially symmetric manner.

6. Windscreen wiper blade as set forth in any of the foregoing Claims, **characterized in that** the underside (3) of the detachable longitudinal section(s) (1b-1d), facing towards the windscreen (2), is concave in shape.

7. Windscreen wiper blade as set forth in any of the foregoing Claims, **characterized in that** the elastic material of the detachable longitudinal section(s) is softer than the material of the remaining blade rubber profile (1a).

8. Windscreen wiper blade as set forth in any of the foregoing Claims, **characterized in that** the rear profile (2) is composed of metal or plastic members (15) pivotably joined to one another.

9. Windscreen wiper blade as set forth in Claim 8, **characterized in that** said members are secured to one or two flexible steel strips (16).

10. Windscreen wiper blade as set forth in any of the foregoing Claims, **characterized in that** the back of the blade rubber profile (1a) incorporates one or two metal strips (14) made of spring steel.

11. Windscreen wiper blade as set forth in Claim 10, **characterized in that** said metal strips are corrugated.

## Revendications

1. Raclette d'essuie-glace pour un véhicule avec un caoutchouc d'essuyage (1) en forme de profilé qui est fixée sur un profilé arrière (2) et qui appuie sur la surface de la vitre par des lèvres (6a-6d), le profilé (1) du caoutchouc d'essuyage étant divisé dans le sens de la longueur deux ou plusieurs fois,
caractérisée en ce que le profilé du caoutchouc d'essuyage (1a) et les lèvres (6b-6d) sont formés séparables les uns des autres et en plusieurs parties, au moins l'une des zones longitudinales du profilé (1b-1d) du caoutchouc d'essuyage proche de la vitre (2) formant au moins une lèvre (6b-6d) étant fixée amovible sur le profilé du caoutchouc d'essuyage (1a) restant porté par le profilé arrière (2).

2. Raclette d'essuie-glace selon la revendication 1,
caractérisée en ce que la ou les zone(s) longitudinale(s) du profilé (1b-1d) amovible(s) se logent, par des saillies contre-dépouillées (7) sur les côtés tournés vers le profilé du caoutchouc d'essuyage (1a) restant, dans des évidements (8) formés en correspondance du profilé du caoutchouc d'essuyage (1a).

3. Raclette d'essuie-glace selon la revendication 1 ou 2,
caractérisée en ce que le profilé du caoutchouc d'essuyage (1) et/ou la ou les zone(s) longitudinale(s) amovible(s) du profilé (1b-1d) forment un canal longitudinal (11) pour un fluide, en particulier un liquide de lavage qui sort d'ouvertures (12).

4. Raclette d'essuie-glace selon la revendication 3,
caractérisée en ce que la ou les zone(s) longitudinale(s) amovible(s) du profilé forment sur le côté tourné vers le profilé du caoutchouc d'essuyage (1a) restant un évidement longitudinal (9) qui forme, ensemble avec un évidement longitudinal (10) du profilé du caoutchouc d'essuyage (1a) restant un canal longitudinal (11) pour le fluide, des ouvertures (12) s'étendant depuis le canal longitudinal (11) pour la sortie du fluide du côté inférieur du caoutchouc d'essuyage (3) tourné vers la vitre (2).

5. Raclette d'essuie-glace selon la revendication 2, 3 ou 4,
caractérisée en ce que les saillies contre-dépouillées (7) et les lèvres (6b-6d), disposées sur des côtés opposés, de la ou des zone(s) longitudinale(s) amovible(s) du profilé présentent la même section transversale en forme et en grandeur et sont disposées symétriques en rotation et en pivotement.

6. Raclette d'essuie-glace selon l'une des revendications précédentes,
caractérisée en ce que le côté inférieur (3) tourné vers la vitre (2) de la ou des zone(s) longitudinale(s) amovible(s) du profilé (1b-1d) est courbée de manière concave.

7. Raclette d'essuie-glace selon l'une des revendications précédentes,
caractérisée en ce que le matériau élastique de la ou respectivement des zone(s) longitudinale(s) amovible(s) du profilé est plus mou que le matériau du profilé du caoutchouc d'essuyage (1a) restant.

8. Raclette d'essuie-glace selon l'une des revendications précédentes,
caractérisée en ce que le profilé arrière (2) est composé d'éléments individuels (15) disposés articulés les uns aux autres en métal ou en matière synthétique.

9. Raclette d'essuie-glace selon la revendication 8,
caractérisée en ce que les éléments sont fixés sur une ou deux bandes d'acier flexibles (16).

10. Raclette d'essuie-glace selon l'une des revendications précédentes,
caractérisée en ce qu'une ou deux bandes métalliques (14) en acier à ressorts sont enchâssées dans le dos du profilé du caoutchouc d'essuyage (1a).

11. Raclette d'essuie-glace selon l'une des revendications précédentes,
caractérisée en ce que les bandes métalliques sont de forme ondulée.
